# EUROPÄISCHE PATENTANMELDUNG

(11) **EP 1 785 801 A1**
(43) Veröffentlichungstag der Anmeldung: **16.05.2007**
(21) Anmeldenummer: 06023291.5
(22) Anmeldetag: 09.11.2006
(51) Int. Cl.: G06F 1/06, H03L 7/00, G06F 1/10, G06F 1/12

(54) **Elektronische Schaltung und Verfahren zum Betreiben einer elektronischen Schaltung**

(30) Priorität: 15.11.2005 DE 102005054347
(71) Anmelder: ATMEL Duisburg GmbH, 47057 Duisburg (DE)
(72) Erfinder: Radin-Macukat, Marjan, 90419 Nürnberg (DE)
(74) Vertreter: Müller, Wolf-Christian

(57) **Zusammenfassung**

Die vorliegende Erfindung betrifft eine elektronische Schaltung (100) mit einem mindestens ein Nutzsignal vorgebbarer Frequenz verarbeitenden primären Schaltkreis (10), und mit einem Peripherietaktgenerator (21) zur Versorgung mindestens eines sekundären Schaltkreises (20a, 20b) mit einem Peripherietaktsignal (CLK_2).

Erfindungsgemäß ist eine Frequenz des Peripherietaktsignals (CLK_2) in Abhängigkeit des Nutzsignals, insbesondere in Abhängigkeit einer Frequenz des Nutzsignals, gewählt.

## Beschreibung

Die Erfindung betrifft eine elektronische Schaltung mit einem mindestens ein Nutzsignal vorgebbarer Frequenz verarbeitenden primären Schaltkreis, und mit einem Peripherietaktgenerator zur Versorgung mindestens eines sekundären Schaltkreises mit einem Peripherietaktsignal.

Ferner betrifft die Erfindung ein Verfahren zum Betreiben einer elektronischen Schaltung gemäß dem Oberbegriff des Patentanspruchs 10.

Schaltungen der eingangs genannten Art sind bekannt und werden insbesondere in Form integrierter Schaltungen in modernen Kommunikationsgeräten wie z.B. Mobiltelefonen eingesetzt, bei denen der primäre Schaltkreis beispielsweise allgemeine Steuerfunktionen sowie die Kontrolle einer vorzugsweise funkbasierten Kommunikationsschnittstelle übernimmt, während der bzw. die ggf. vorhandenen sekundären Schaltkreise Zusatzfunktionen realisieren. Bei dem Nutzsignal kann es sich beispielsweise um ein Basisbandsignal handeln, welches - nach einer entsprechenden Modulation - zur Übertragung über die funkbasierte Kommunikationsschnittstelle vorgesehen ist. Ebenso kann es sich bei dem Nutzsignal auch um ein bereits moduliertes Signal oder um ein sonstiges Bandpasssignal handeln.

Ein Problem herkömmlicher Schaltungen besteht darin, dass das von dem Peripherietaktgenerator bereitgestellte Peripherietaktsignal das von dem primären Schaltkreis verarbeitete Nutzsignal stören kann. Da das Peripherietaktsignal ebenso wie fast alle anderen in digitalen Schaltungen verwendeten Signale üblicherweise als Rechtecksignal ausgebildet ist, wirkt sich der Störeinfluss des Peripherietaktsignals darüberhinaus nicht nur auf Nutzsignale derselben Frequenz aus. Vielmehr weist das Spektrum eines rechteckförmigen Peripherietaktsignals eine nichtverschwindende Bandbreite auf, so dass auch Nutzsignale gestört werden können, deren Frequenz von der Frequenz des Peripherietaktsignals verschieden ist.

Insbesondere Oberwellen des Peripherietaktsignals weisen häufig Frequenzen auf, die in die von den zur Funkkommunikation verwendeten Frequenzbereiche der Nutzsignale reichen, so dass beispielsweise als Hochfrequenz-Transceiver ausgebildete primäre Schaltkreise von den Oberwellen des Peripherietaktsignals gestört werden. Auf diese Weise können durch die beschriebene, nachteilige Eigenstörung sogar von dem Hochfrequenz-Transceiver verwendete Funkkanäle blockiert werden.

Als Abhilfe gegen eine derartige Eigenstörung des primären Schaltkreises durch das Peripherietaktsignal ist bereits vorgeschlagen worden, das Peripherietaktsignal einer Frequenzmodulation zu unterwerfen. Diese Technik ist auch unter dem Begriff "clock dithering" bekannt und erfordert eine verhältnismäßig aufwändige Steuerung eines entsprechenden Taktgenerators, um die erwähnte Frequenzmodulation zu realisieren, weswegen die Herstellungskosten für derartige Systeme verhältnismäßig hoch sind.

Ein weiterer Nachteil von nach dem Prinzip des clock dithering arbeitenden Systemen besteht darin, dass bei besonders breitbandigen Nutzsignalen, die beispielsweise nach dem WCDMA (wideband code division multiple access)-Verfahren erhalten werden, eine aufgrund des clock dithering erreichte Frequenzverschiebung des Peripherietaktsignals nicht ausreicht, um eine Überlappung der Frequenzen des Peripherietaktsignals und des Nutzsignals zumindest zeitweise auszuschließen.

Weitere Versuche, derartige Eigenstörungen zu reduzieren, sehen konstruktive Maßnahmen wie z.B. die Anbringung von Abschirmungen vor, die jedoch insbesondere bei für einen Benutzer zugänglichen Komponenten nicht oder nur eingeschränkt anwendbar sind und überdies ein erhöhtes Gewicht bzw. einen größeren Konstruktionsaufwand bedingen.

Demgemäß ist es Aufgabe der vorliegenden Erfindung, eine elektronische Schaltung und ein entsprechendes Betriebsverfahren dahingehend zu verbessern, dass die beschriebene Eigenstörung des primären Schaltkreises durch das Peripherietaktsignal verringert wird.

Diese Aufgabe wird bei einer elektronischen Schaltung der eingangs genannten Art erfindungsgemäß dadurch gelöst, dass eine Frequenz des Peripherietaktsignals in Abhängigkeit des Nutzsignals, insbesondere in Abhängigkeit einer Frequenz des Nutzsignals gewählt ist.

Durch die erfindungsgemäße Auswahl der Frequenz des Peripherietaktsignals in Abhängigkeit des Nutzsignals ist es beispielsweise möglich, die Frequenz des Peripherietaktsignals so einzustellen, dass sich eine möglichst geringe Störwirkung auf das Nutzsignal ergibt. Das heißt, durch die Auswahl einer geeigneten Frequenz für das Peripherietaktsignal lässt sich bereits eine wesentliche Verminderung der Eigenstörung der erfindungsgemäßen elektronischen Schaltung erzielen, so dass auf aufwändige Abschirmmaßnahmen verzichtet werden kann.

Bei einer besonders vorteilhaften Ausführungsform der erfindungsgemäßen Schaltung ist die Frequenz des Peripherietaktsignals so gewählt, dass die Frequenz mindestens einer Oberwelle des Peripherietaktsignals eine vorgebbare Frequenzdifferenz zu der Frequenz des Nutzsignals nicht unterschreitet. Hierdurch ist sichergestellt, dass auch die Oberwellen des bei Digitalschaltungen üblicherweise als Rechtecksignal ausgebildeten Peripherietaktsignals eine möglichst geringe Störwirkung auf das Nutzsignal entfalten.

Bei einer weiteren vorteilhaften Erfinduncsvariante weist die Schaltung einen primären Taktgenerator zur Versorgung des primären Schaltkreises mit einem Referenztaktsignal auf. Neben der Versorgung des primären Schaltkreises kann das Referenztaktsignal des primären Taktgenerators ferner zur Versorgung des Peripherietaktgenerators eingesetzt werden, so dass der Peripherietaktgenerator in an sich bekannter Weise, beispielsweise mittels programmierbarerer Frequenzteiler oder dergleichen, ausgehend von dem Referenztaktsignal das Peripherietaktsignal bilden kann.

Alternativ oder auch ergänzend zu dem primären Taktgenerator kann die erfindungsgemäße Schaltung beziehungsweise der primäre Schaltkreis auch mit einem Referenztaktsignal versorgt werden, das von einer externen Quelle wie beispielsweise von einem externen RC-Oszillator oder auch einem Quarzoszillator stammt.

Es ist ferner möglich, dass der primäre Taktgenerator einen Oszillator, insbesondere einen Quarzoszillator, aufweist.

In vorteilhafter Weiterbildung der vorliegenden Erfindung kann der primäre Taktgenerator ferner eine Phasenregelschleife aufweisen, die besonders zweckmäßig in Verbindung mit einem spannungsgesteuerten Oszillator (VCO, voltage controlled oscillator) eingesetzt wird.

Bei einer weiteren besonders vorteilhaften Variante der erfindungsgemäßen Schaltung weist der Peripherietaktgenerator einen spannungsgesteuerten Oszillator auf, so dass eine Frequenz des von dem Peripherietaktgenerator erzeugten Peripherietaktsignals durch Auswahl einer geeigneten Steuerspannung für den spannungsgesteuerten Oszillator besonders einfach einstellbar ist.

Zusätzlich kann der Peripherietaktgenerator vorteilhaft eine Phasenregelschleife aufweisen, um seinen spannungsgesteuerten Oszillator in an sich bekannter Weise zu regeln.

Bei einer weiteren Ausführungsform der vorliegenden Erfindung ist mindestens ein sekundärer Schaltkreis vorgesehen. Solche sekundären Schaltkreise können beispielsweise als anwendungsspezifische integrierte Schaltkreise (ASIC, application specific integrated circuit) ausgebildet sein und z.B. zur Realisierung von Funktionalitäten dienen, die aus technischen oder wirtschaftlichen Gründen bevorzugt nicht in den primären Schaltkreis integriert werden.

Bei einer Ausbildung des primären Schaltkreises als Steuerungs- bzw. Signalverarbeitungseinheit z.B. für ein Mobiltelefon bestehen typische Funktionalitäten, die von sekundären Schaltkreisen bereitgestellt werden, beispielsweise in der Realisierung von Speicherschnittstellen zu internen oder externen Massenspeichem bzw. auswechselbaren Speichermedien, Multimediafunktionen, insbesondere zur Steuerung von LC-Displays oder sonstigen Ausgabevorrichtungen und dergleichen.

Bei einer weiteren sehr vorteilhaften Ausführungsform der vorliegenden Erfindung ist das Peripherietaktsignal mindestens zwei sekundären Schaltkreisen zugeführt. Da das Peripherietaktsignal hinsichtlich seiner Frequenz erfindungsgemäß bereits so gewählt ist, dass sich daraus eine möglichst geringe Störung des von dem primären Schaltkreis verarbeiteten Nutzsignals ergibt, können prinzipiell beliebig viele sekundäre Schaltkreise mit dem Peripherietaktsignal versorgt werden, ohne dass für jeden sekundären Schaltkreis separate Maßnahmen zur Unterdrückung von Eigenstörungen vorzusehen sind, wie dies bei manchen Lösungsansätzen aus dem Stand der Technik der Fall ist.

Als eine weitere Lösung der Aufgabe der vorliegenden Erfindung ist bei einem Verfahren zum Betreiben einer elektronischen Schaltung mit einem mindestens ein Nutzsignal vorgebbarer Frequenz verarbeitenden primären Schaltkreis und mit einem sekundären Taktgenerator zur Versorgung mindestens eines sekundären Schaltkreises mit einem Peripherietaktsignal vorgesehen, dass eine Frequenz des Peripherietaktsignals in Abhängigkeit des Nutzsignals, insbesondere in Abhängigkeit einer Frequenz des Nutzsignals, gewählt wird.

Besonders vorteilhaft wird die Frequenz des Peripherietaktsignals bei einer weiteren Ausführungsform der vorliegenden Erfindung durch den primären Schaltkreis vorgegeben.

Hierdurch ist es möglich, dass auch während des Betriebs der elektronischen Schaltung eine Anpassung der Frequenz des Peripherietaktsignals vorgenommen werden kann.

Besonders vorteilhaft kann eine derartige dynamische Anpassung der Frequenz des Peripherietaktsignals dadurch erfolgen, dass der primäre Schaltkreis eine auf einen spannungsgesteuerten Oszillator des Peripherietaktgenerators wirkende Steuerspannung ändert und somit direkt die Frequenz des Peripherietaktsignals verändert.

Ganz besonders zweckmäßig ist es ferner, die Frequenz des Peripherietaktsignals in Abhängigkeit eines Betriebszustands des primären Schaltkreises zu wählen. Dieses Verfahren kann vorzugsweise dann angewendet werden, wenn das von dem primären Schaltkreis verarbeitete Nutzsignal eine sich zeitlich ändernde Frequenz aufweist, oder wenn der primäre Schaltkreis mehrere Nutzsignale unterschiedlicher Frequenzen verarbeitet, wie dies beispielsweise bei einem Transceiver der Fall ist, der Sende- beziehungsweise Empfangssignale aus unterschiedlichen Frequenzbereichen bzw. Funkkanälen verarbeitet.

Weitere Vorteile, Merkmale und Einzelheiten ergeben sich aus der nachfolgenden Beschreibung, in der unter Bezugnahme auf die Zeichnung verschiedene Ausführungsbeispiele der Erfindung dargestellt sind. Dabei können die in den Ansprüchen und in der Beschreibung erwähnten Merkmale jeweils einzeln für sich oder in beliebiger Kombination erfindungswesentlich sein.

In der Zeichnung zeigt:
- Figur 1: ein Blockschaltbild einer ersten Ausführungsform der erfindungsgemäßen Schaltung, und
- Figur 2: ein Flussdiagramm, das eine Ausführungsform des erfindungsgemäßen Verfahrens wiedergibt.

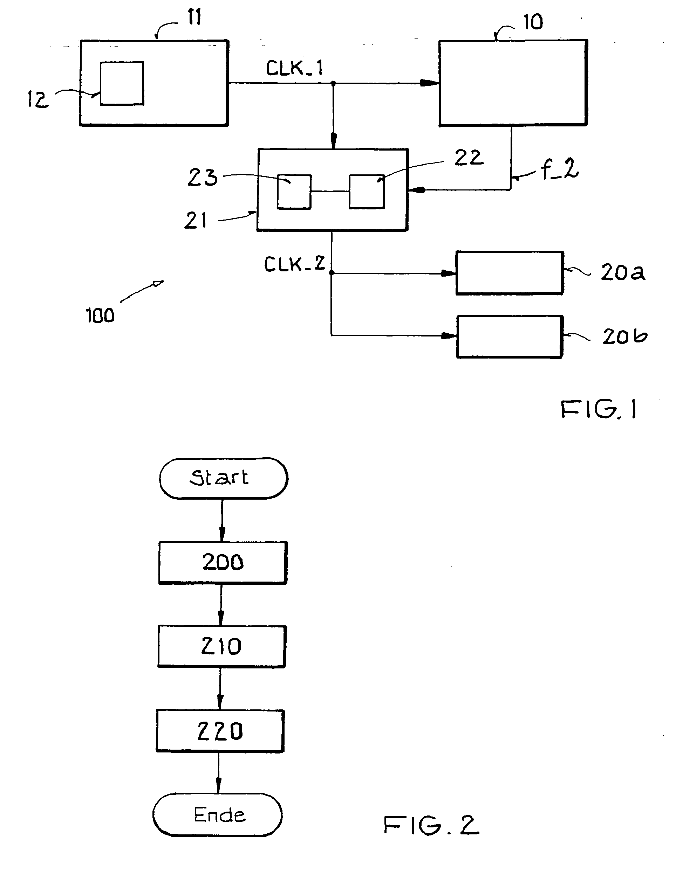

Figur 1 zeigt eine erste Ausführung der erfindungsgemäßen elektronischen Schaltung 100 in Form eines Blockschaltbilds. Die Schaltung 100 weist einen primären Schaltkreis 10 auf, der mindestens ein Nutzsignal vorgebbarer Frequenz verarbeitet. Bei dem primären Schaltkreis 10 kann es sich beispielsweise um einen integrierten Schaltkreis handeln, der die Funktionalität eines Transceivers aufweist und beispielsweise in modernen Mobiltelefonen zur Realisierung einer Funkschnittstelle eingesetzt wird. In diesem Fall stellen entsprechende Funksignale, die von dem Transceiver in verschiedenen Frequenzbereichen bzw. auf jeweiligen Funkkanälen empfangen werden, Nutzsignale im Sinne der vorliegenden Erfindung dar.

Der primäre Schaltkreis 10 wird von einem primären Taktgenerator 11 mit einem Referenztaktsignal CLK_1 versorgt, das innerhalb des primären Taktgenerators 11 beispielsweise mittels eines Quarzoszillators 12 erhalten wird. Anstelle des Quarzoszillators 12 kann auch ein beliebiger anderer Oszillator in dem primären Taktgenerator 11 vorgesehen sein, der ein Referenztaktsignal CLK_1 liefern kann, das den Anforderungen des primären Schaltkreises 10 z.B. hinsichtlich einer Frequenzstabilität und dergleichen gerecht wird.

Zusätzlich zu dem primären Schaltkreis 10 weist die Schaltung 100 zwei vorzugsweise ebenfalls als integrierte Schaltkreise ausgebildete sekundäre Schaltkreise 20a, 20b auf, die beispielsweise eine Schnittstellen- bzw. Multimedia-Funktionalität bereitstellen und den primären Schaltkreis 10 hierdurch ergänzen. Die sekundären Schaltkreise 20a, 20b sind über einen nicht in Figur 1 abgebildeten Datenbus mit dem primären Schaltkreis 10 verbunden.

Beispielsweise kann es sich bei dem ersten sekundären Schaltkreis 20a um einen Schnittstellenbaustein handeln, der zur Ansteuerung eines ebenfalls nicht in Figur 1 abgebildeten Massenspeichermediums dient. Bei dem zweiten sekundären Schaltkreis 20b kann es sich beispielsweise um eine Steuervorrichtung für eine Anzeigeeinheit wie z.B. ein LC-Display handeln.

Erfindungsgemäß werden die sekundären Schaltkreise 20a, 20b von einem eigens hierfür vorgesehenen Peripherietaktgenerator 21 mit einem Peripherietaktsignal CLK_2 versorgt, das in dem Peripherietaktgenerator 21 erzeugt beziehungsweise aus dem Referenztaktsignal CLK_1 abgeleitet wird.

Zur Bildung des Peripherietaktsignals CLK_2 kann der Peripherietaktgenerator 21 beispielsweise einen spannungsgesteuerten Oszillator 22 aufweisen, dem eine Phasenregelschleife 23 zugeordnet ist. Gegebenenfalls erforderliche Frequenzteilerschaltungen beziehungsweise Pufferschaltungen zur Pufferung des Referenztaktsignals CLK_1 beziehungsweise des Peripherietaktsignals CLK_2 sind in Figur 1 nicht dargestellt.

Um sicherzustellen, dass das Peripherietaktsignal CLK_2 beziehungsweise dessen Oberwellen nicht den primären Schaltkreis 10 und/oder die von dem primären Schaltkreis 10 verarbeiteten Nutzsignale stören, ist die Frequenz des Peripherietaktsignals CLK_2 erfindungsgemäß so gewählt, dass sich eine geringstmögliche Störung der Nutzsignale ergibt.

Beispielsweise kann als Kriterium zur Auswahl der Frequenz des Peripherietaktsignals CLK_2 eine minimale Frequenzdifferenz vorgegeben werden, die zwischen dem Peripherietaktsignal CLK_2 bzw. einer oder mehrerer Oberwellen des Peripherietaktsignals CLK_2 und dem Nutzsignal bzw. den Nutzsignalen besteht und nicht unterschritten werden darf.

Bei besonders breitbandigen Nutzsignalen wie beispielsweise WCDMA-Signalen lässt sich eine Frequenzüberlappung des Nutzsignals mit dem Peripherietaktsignal CLK_2 bzw. dessen Oberwellen üblicherweise nicht völlig vermeiden. Um dennoch eine möglichst geringe Störung eines derartigen WCDMA-Nutzsignals durch das Peripherietaktsignal CLK_2 bzw. dessen Oberwellen zu erzielen, wird auch in diesem Fall die Frequenz des Peripherietaktsignals CLK_2 erfindungsgemäß so gewählt, dass sich eine minimale Beeinträchtigung der Signalqualität des WCDMA-Nutzsignals ergibt.

Bei einer besonders vorteilhaften Ausführungsform der vorliegenden Erfindung steuert der primäre Schaltkreis 10 direkt den spannungsgesteuerten Oszillator 22 des Peripherietaktgenerators 21 an, um die Frequenz des Peripherietaktsignals CLK_2 einzustellen, was in dem Blockschaltbild gemäß Figur 1 durch das mit dem Bezugszeichen f_2 bezeichnete Signal symbolisiert ist.

Ein weiterer Vorteil der vorliegenden Erfindung besteht darin, dass die Frequenz des Peripherietaktsignals CLK_2 in Abhängigkeit eines Betriebszustands des primären Schaltkreises 10 gewählt werden kann. Hierdurch kann die Frequenz des Peripherietaktsignals CLK_2 stets an eine Frequenz des momentan von dem primären Schaltkreis 10 verarbeiteten Nutzsignals angepasst werden. Diese Erfindungsvariante ist besonders vorteilhaft einsetzbar bei als Transceiver bzw. Receiver ausgebildeten primären Schaltkreisen 10 oder anderen primären Schaltkreisen 10, die abwechselnd Nutzsignale verschiedener Frequenz, d.h. beispielsweise auf verschiedenen Frequenzkanälen, empfangen bzw. verarbeiten.

Durch die entsprechende Auswahl einer bestimmten Frequenz für das Peripherietaktsignal CLK_2 kann dynamisch für jeden von dem primären Schaltkreis 10 verwendeten Frequenzkanal eine minimale Eigenstörung z.B. eines Funkempfangs durch das Peripherietaktsignal CLK_2 und damit eine maximale Empfindlichkeit bei dem Empfang eines Funksignals sichergestellt werden.

Ein Beispiel für die dynamische Auswahl eines Peripherietaktsignals CLK_2 geeigneter Frequenz ist nachfolgend anhand des in Figur 2 abgebildeten Flussdiagramms erläutert.

In dem ersten Schritt 200 des erfindungsgemäßen Betriebsverfahrens wird zunächst ein Betriebszustand des primären Schaltkreises 10 (Figur 1) ermittelt. Der Betriebszustand kann beispielsweise abhängig sein von einem momentan von dem primären Schaltkreis 10 verwendeten Funkkanal, der einen bestimmten Frequenzbereich für das Nutzsignal definiert.

Anschließend wird in Schritt 210 (Figur 2) in Abhängigkeit des zuvor in Schritt 200 ermittelten Betriebszustands des primären Schaltkreises 10 eine Frequenz für das Peripherietaktsignal CLK_2 gewählt, bei der eine minimale Eigenstörung der Schaltung 100 bzw. des primären Schaltkreises 10 durch das Peripherietaktsignal CLK_2 gegeben ist.

Die betreffende Frequenz für das Peripherietaktsignal CLK_2 wird danach in Schritt 220 eingestellt, was in der bereits beschriebenen Weise durch die Auswahl einer geeigneten Steuerspannung für den spannungsgesteuerten Oszillator 22 des Peripherietaktgenerators 21 erfolgen kann.

Das vorstehend beschriebene Verfahren kann periodisch wiederholt werden, wobei eine neue Frequenz für das Peripherietaktsignal CLK_2 vorzugsweise stets dann ermittelt wird, wenn sich ein Frequenzbereich des Nutzsignals ändert.

Falls die möglichen Frequenzbereiche des Nutzsignals bekannt sind, kann die Frequenz des Peripherietaktsignals CLK_2 bei einer weiteren Ausführungsform der vorliegenden Erfindung beispielsweise durch entsprechende Auslegung des Peripherietaktgenerators 21 auch fest vorgegeben sein, so dass die Notwendigkeit einer Steuerung des Peripherietaktgenerators 21 durch den primären Schaltkreis 10 ganz entfällt.

Die erfindungsgemäße Schaltung 100 und das erfindungsgemäße Betriebsverfahren hierfür ermöglichen in einfacher Weise eine deutliche Reduzierung der durch das Peripherietaktsignal CLK_2 verursachten Eigenstörungen. Im Gegensatz zu herkömmlichen, beispielsweise nach dem Prinzip des clock dithering arbeitenden Verfahren, ist zur Realisierung der vorliegenden Erfindung keine komplexe Steuerung des Peripherietaktgenerators 21 erforderlich.

Durch die gleichzeitige Versorgung mehrerer sekundärer Schaltkreise 20a, 20b mit demselben Peripherietaktsignal CLK_2 entfällt ferner der Aufwand, mehrere unterschiedliche, u.U. jeweils mit einer clock dithering - Funktionalität ausgestattete Peripherietaktgeneratoren für verschiedene sekundäre Schaltkreise bereitzustellen.

Darüber hinaus wirkt sich die erfindungsgemäße Auswahl beziehungsweise Einstellung der Frequenz des Peripherietaktsignals CLK_2 nicht negativ auf die Funktion der erfindungsgemäßen Schaltung 100 aus, weil das Peripherietaktsignal CLK_2 nur von den sekundären Schaltkreisen 20a, 20b verarbeitet wird. Der primäre Schaltkreis 10, der das Referenztaktsignal CLK_1 unter anderem im Hinblick auf seine Receiver- bzw. Transceiver-Funktionalität z.B. zum Betrieb von Mischern oder Demodulatoren und dergleichen verwendet, wird stets mit einem Referenztaktsignal CLK_1 derselben Taktfrequenz versorgt.

Die Versorgung des primären Schaltkreises 10 mit dem Referenztaktsignal CLK_1 kann darüberhinaus auch in Form eines externen Taktsignals (nicht gezeigt) erfolgen.

Erfindungsgemäß ist es ferner möglich, mehrere Peripherietaktgeneratoren (nicht gezeigt) vorzusehen, von denen jeder z.B. durch den primären Schaltkreis 10 so angesteuert wird, dass er ein Peripherietaktsignal abgibt, das keine oder nur eine minimale Eigenstörung der Schaltung 100 bewirkt.

## Patentansprüche

1. Elektronische Schaltung (100) mit einem mindestens ein Nutzsignal vorgebbarer Frequenz verarbeitenden primären Schaltkreis (10), und mit einem Peripherietaktgenerator (21) zur Versorgung mindestens eines sekundären Schaltkreises (20a, 20b) mit einem Peripherietaktsignal (CLK_2), **dadurch gekennzeichnet, dass** eine Frequenz des Peripherietaktsignals (CLK_2) in Abhängigkeit des Nutzsignals, insbesondere in Abhängigkeit einer Frequenz des Nutzsignals, gewählt ist.

2. Schaltung (100) nach Anspruch 1, **dadurch gekennzeichnet, dass** die Frequenz des Peripherietaktsignals (CLK_2) so gewählt ist, dass die Frequenz mindestens einer Oberwelle des Peripherietaktsignals (CLK_2) eine vorgebbare Frequenzdifferenz zu der Frequenz des Nutzsignals nicht unterschreitet.

3. Schaltung (100) nach einem der vorstehenden Ansprüche, **gekennzeichnet durch** einen primären Taktgenerator (11) zur Versorgung des primären Schaltkreises (10) mit einem Referenztaktsignal (CLK_1).

4. Schaltung (100) nach Anspruch 3, **dadurch gekennzeichnet, dass** der primäre Taktgenerator (11) einen Oszillator (12), insbesondere einen Quarzoszillator, aufweist.

5. Schaltung (100) nach einem der Ansprüche 3 oder 4, **dadurch gekennzeichnet, dass** der primäre Taktgenerator (11) eine Phasenregelschleife aufweist.

6. Schaltung (100) nach einem der vorstehenden Ansprüche, **dadurch gekennzeichnet, dass** der Peripherietaktgenerator (21) einen spannungsgesteuerten Oszillator (22) aufweist.

7. Schaltung (100) nach Anspruch 6, **dadurch gekennzeichnet, dass** der Peripherietaktgenerator (21) eine Phasenregelschleife (23) aufweist.

8. Schaltung (100) nach einem der vorstehenden Ansprüche, **gekennzeichnet durch** mindestens einen sekundären Schaltkreis (20a, 20b).

9. Schaltung (100) nach Anspruch 8, **dadurch gekennzeichnet, dass** das Peripherietaktsignal (CLK_2) mindestens zwei sekundären Schaltkreisen (20a, 20b) zugeführt ist.

10. Verfahren zum Betreiben einer elektronischen Schaltung (100) mit einem mindestens ein Nutzsignal vorgebbarer Frequenz verarbeitenden primären Schaltkreis (10) und mit einem sekundären Taktgenerator (21) zur Versorgung mindestens eines sekundären Schaltkreises (20a, 20b) mit einem Peripherietaktsignal (CLK_2), **dadurch gekennzeichnet, dass** eine Frequenz des Peripherietaktsignals (CLK_2) in Abhängigkeit des Nutzsignals, insbesondere in Abhängigkeit einer Frequenz des Nutzsignals, gewählt wird.

11. Verfahren nach Anspruch 10, **dadurch gekennzeichnet, dass** die Frequenz des Peripherietaktsignals (CLK_2) durch den primären Schaltkreis (10) vorgegeben wird.

12. Verfahren nach Anspruch 11, **dadurch gekennzeichnet, dass** die Frequenz des Peripherietaktsignals (CLK_2) in Abhängigkeit eines Betriebszustands des primären Schaltkreises (10) gewählt wird.
